# EUROPÄISCHE PATENTANMELDUNG

(11) **EP 1 982 867 A2**
(43) Veröffentlichungstag der Anmeldung: **22.10.2008**
(21) Anmeldenummer: 08007089.9
(22) Anmeldetag: 10.04.2008
(51) Int. Cl.: B60R 5/04

(54) **Laderaumabdeckung für ein Kraftfahrzeug**

(30) Priorität: 16.04.2007 DE 202007005711 U
(71) Anmelder: BOS GmbH & Co. KG, 73760 Ostfildern (DE)
(72) Erfinder: Lingemann, Gerald, Kernen i.R. (DE)
(74) Vertreter: Patentanwälte Ruff, Wilhelm, Beier, Dauster & Partner

(57) **Zusammenfassung**

Eine Laderaumabdeckung (7) für ein Kraftfahrzeug mit einem zwischen einer kompakt abgelegten Ruheposition und einer ausgezogenen Funktionsposition beweglich gelagerten, flexiblen Flächengebilde (7), das an seinem in Auszugrichtung vorderen Stirnendbereich mit einem formstabilen Konturteil (8) versehen ist, das einen ebenen oder gewölbten Flächenkörper mit gegenüber seiner Länge und Breite wesentlich verringerter Dicke umfasst, ist bekannt.

Erfindungsgemäß ist vorgesehen, dass der Flächenkörper (12) mit mehreren, über seine Fläche verteilt angeordneten Aussparungen (16) versehen ist.

## Beschreibung

Die Erfindung betrifft eine Laderaumabdeckung für ein Kraftfahrzeug mit einem zwischen einer kompakt abgelegten Ruheposition und wenigstens einer ausgezogenen Funktionsposition beweglich gelagerten, flexiblen Flächengebilde, das an seinem in Auszugrichtung vorderen Stirnendbereich mit einem formstabilen Konturteil versehen ist, das einen ebenen oder gewölbten Flächenkörper mit gegenüber seiner Länge und Breite wesentlich verringerter Dicke umfasst.

Eine derartige Laderaumabdeckung ist für Kombi-Personenkraftwagen allgemein bekannt. Die bekannte Laderaumabdeckung weist ein flexibles Flächengebilde in Form einer Abdeckplane auf, die mit einem rückseitigen Stirnendbereich auf einer Wickelwelle auf- und abwickelbar gelagert ist. Die Wickelwelle ist in einem Kassettengehäuse drehbar gelagert, das fahrzeugfest in dem Laderaum des Kombi-Personenkraftwagens gehalten ist. Das Kassettengehäuse ist unmittelbar hinter einer Rückenlehnenanordnung einer Fondsitzbank positioniert. In seiner kompakt abgelegten Ruheposition ist das Flächengebilde vollständig auf die Wickelwelle aufgewickelt und somit innerhalb des Kassettengehäuses positioniert. An einem in Auszugrichtung vorderen Stirnendbereich ist die Abdeckplane mit einem formstabilen Konturteil verbunden, dem seitlich nach außen abragende Einhängezapfen zugeordnet sind. Mittels der Einhängezapfen wird das Flächengebilde in seiner ausgezogenen Abdeckposition in fahrzeugseitige Halteaufnahmen in einem Heckbereich des Laderaumes eingehängt, wobei das Flächengebilde, d.h. die Abdeckplane, etwa horizontal ausgezogen ist. Das Konturteil erstreckt sich ausgehend von dem vorderen Stirnendbereich der Abdeckplane zum Heckbereich des Laderaumes nach hinten und ist derart auf den zwischen dem vorderen Stirnendbereich der Abdeckplane und der innenseitigen Heckbegrenzung des Laderaumes verbleibenden Freiraum abgestimmt, dass es diesen Freiraum im Wesentlichen überdeckt. Dadurch wird verhindert, dass von außerhalb des Fahrzeugs ein Durchblick auf den Laderaumboden zwischen dem Stirnendbereich des Flächengebildes und der Heckbegrenzung, insbesondere einer Heckklappe, möglich ist. Das Konturteil besitzt einen plattenförmigen Flächenkörper, dessen Außenkontur auf die Begrenzungskontur des zu überdeckenden Freiraumes in ausgezogener Schutzposition der Abdeckplane abgestimmt ist. Der Flächenkörper ist bei den bekannten Kombi-Personenkraftwagen als ebene Platte ausgeführt. Er erstreckt sich über die gesamte Breite der Abdeckplane. Bei bekannten Konturteilen ist der Flächenkörper PVC-beschichtet. Das Konturteil ist mit einem Griffelement versehen, um eine manuelle Betätigung der Abdeckplane zu ermöglichen.

Es sind auch Laderaumabdeckungen bekannt, bei denen das Flächengebilde und demzufolge auch das Konturteil durch einen elektrischen Antrieb bewegt werden.

Aufgabe der Erfindung ist es, eine Laderaumabdeckung der eingangs genannten Art zu schaffen, die eine vereinfachte Handhabung des Flächengebildes und des Konturteiles ermöglicht.

Diese Aufgabe wird dadurch gelöst, dass der Flächenkörper mit mehreren, über seine Fläche verteilt angeordneten Aussparungen versehen ist. Durch die Aussparungen ergibt sich eine Gewichtsreduzierung des Flächenkörpers. Die notwendige Formsteifigkeit des Flächenkörpers wird durch die Aussparungen nicht beeinträchtigt. Die Gewichtsreduzierung ist für das Konturteil von Vorteil, da es aufgrund seines geringeren Gewichtes einfacher manuell handhabbar ist. Damit ist auch das Flächengebilde selbst mit geringerem Kraftaufwand zwischen seiner wenigstens einen ausgezogenen Funktionsposition und seiner Ruheposition manuell verlagerbar. Sowohl in der Ruheposition, in der das Konturteil insbesondere im Bereich eines Austrittschlitzes eines Kassettengehäuses anliegt, als auch in der ausgezogenen Endposition wird das Konturteil durch sein Gewicht nicht so weit nach unten hängen, wie dies bei bekannten Konturteilen der Fall ist. Die erfindungsgemäße Lösung eignet sich in besonders vorteilhafter Weise für relativ großflächige Konturteile, die einen relativ großen Spalt oder Freiraum zwischen dem Flächengebilde in ausgezogener Endposition und einer Heckbegrenzung ausfüllen müssen.

In Ausgestaltung der Erfindung sind die Aussparungen als Vertiefungen ausgeführt, die wenigstens von einer Seite her in eine Oberfläche des Flächenkörpers eingebracht sind. Das Einbringen der Aussparungen, vorliegend der Vertiefungen, kann entweder gemeinsam mit der Herstellung des Flächenkörpers oder nach erfolgter Herstellung des Flächenkörpers erfolgen. Die Vertiefungen erstrecken sich lediglich über einen Teil der Dicke des Flächenkörpers, so dass der Flächenkörper seinen geschlossenen Gesamteindruck behält.

In weiterer Ausgestaltung der Erfindung sind die Aussparungen als zu beiden Seiten hin offene Durchtritte gestaltet. Diese Durchtritte schaffen somit offene, sich über die gesamte Dicke des Flächenkörpers erstreckende Bereiche, so dass der Flächenkörper eine Lochstruktur besitzt. Der Querschnitt der Durchtritte ist entweder über die Länge des Durchtrittes, d.h. die Dicke des Flächenkörpers, gleichbleibend oder sich verändernd ausgeführt. Die Randkonturen der Durchtritte können kreisrund, eckig oder in beliebiger anderer, runder oder unrunder Kontur ausgeführt sein.

In weiterer Ausgestaltung der Erfindung sind die Vertiefungen paarweise von gegenüberliegenden Seiten her vorgesehen und liegen sich quer zu einer Körperebene des Flächenkörpers diametral gegenüber. Die Vertiefungen sind somit jeweils auf gleicher Höhe einander gegenüberliegend von Ober- und Unterseite her in den Flächenkörper eingebracht. Bei einer weiteren Ausgestaltung der Erfindung sind die Vertiefungen gerade nicht gegenüberliegend, sondern gleichmäßig versetzt zueinander von gegenüberliegenden Seiten her eingebracht.

In weiterer Ausgestaltung der Erfindung ist der Flächenkörper wenigstens einseitig mit einem Überzug versehen. Als Überzug kann eine Beschichtung durch einen flüssigen oder pulverförmigen Stoff vorgesehen sein. Alternativ ist als Überzug ein Bezug aus einem Kunststoff- oder Textilmaterial vorgesehen.

In vorteilhafter Weise ist der Überzug als wenigstens einteiliges Schichtgebilde gestaltet. Bei mehrschichtigem Aufbau des Schichtgebildes können Textil-, Kunststoff- und Vliesmaterialien miteinander kombiniert sein.

In weiterer Ausgestaltung der Erfindung sind Abschnitte des Überzugs in die Aussparungen eingezogen. Der Überzug überdeckt den Flächenkörper damit zwar flächig, ist aber an den Aussparungen in diese eingetaucht, so dass sich auf Höhe der Aussparungen Mulden im Überzug ergeben.

In weiterer Ausgestaltung der Erfindung ist der Flächenkörper beidseitig mit einem Überzug beschichtet, wobei die beiden Überzugschichten an Seitenrändern des Flächenkörpers miteinander verbunden sind. Dadurch wird eine allseitige flächige Überdeckung des Flächenkörpers durch die Überzugschichten erzielt.

In weiterer Ausgestaltung der Erfindung ist der Überzug auf den Flächenkörper aufkaschiert. Hierdurch wird eine besonders sichere und dauerhafte Verbindung des Überzuges mit dem Flächenkörper erzielt.

In weiterer Ausgestaltung der Erfindung sind Abschnitte des Überzuges auf gegenüberliegenden Seiten des Flächenkörpers im Bereich von Durchtritten miteinander verbunden. Die muldenartig in die Durchtritte eintauchenden Abschnitte des Überzugs sind somit an ihren Innenseiten miteinander verbunden, um eine weitere Verbesserung der Fixierung des Überzugs auf dem Flächenkörper zu erreichen. Die Verbindung kann durch Stoffschluss erfolgen. Alternativ ist es auch möglich, mechanische Verbindungsmittel, wie Niete oder Ähnliches, vorzusehen.

Weitere Vorteile und Merkmale der Erfindung ergeben sich aus den Ansprüchen sowie aus der nachfolgenden Beschreibung bevorzugter Ausführungsbeispiele der Erfindung, das anhand der Zeichnungen dargestellt ist.
- Fig. 1: zeigt schematisch eine Ausführungsform einer erfindungsgemäßen Laderaumabdeckung für einen Laderaum eines Personenkraftwagens,

- Fig. 2: in vergrößerter, perspektivischer Darstellung die Laderaumabdeckung nach Fig. 1,
- Fig. 3: in weiter vergrößerter Darstellung einen Teil der Laderaumabdeckung auf Höhe eines Konturteiles, das aus Übersichtlichkeitsgründen teilweise aufgeschnitten ist und
- Fig. 4a und 4b: zwei Querschnitte durch Konturteile identisch oder ähnlich Fig. 3, die mit unterschiedlich gestalteten Überzügen versehen sind.

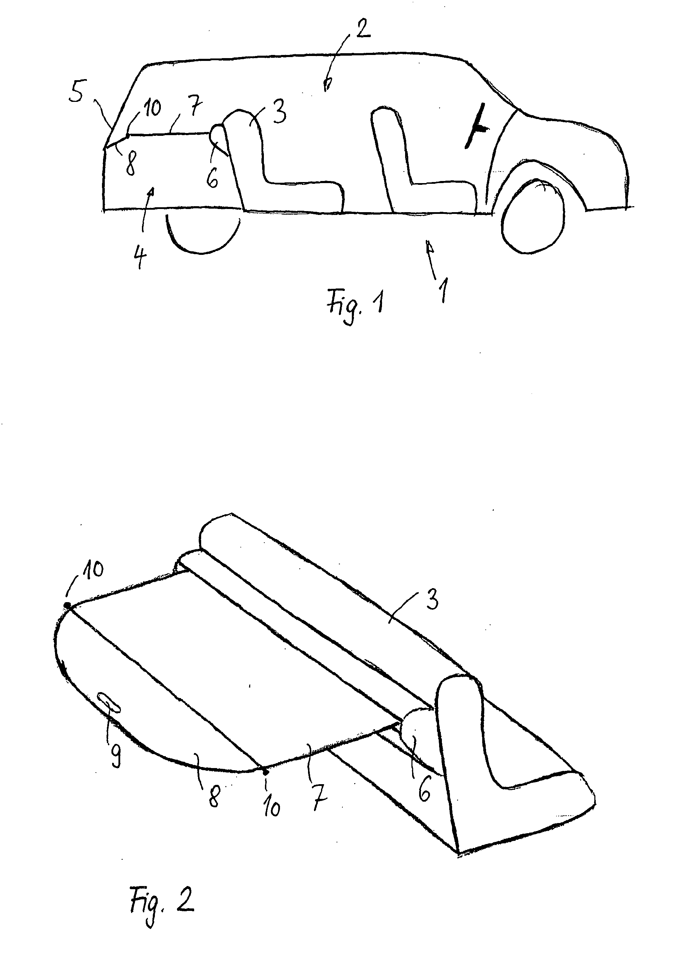

Ein Kraftfahrzeug in Form eines Kombi-Personenkraftwagens 1 nach Fig. 1 weist einen Fahrzeuginnenraum 2 auf, der in einem Heckbereich als Laderaum 4 ausgebildet ist. Der Laderaum 4 ist zu einem Fahrgastraum hin nach vorne durch eine Rückenlehnenanordnung 3 einer Fondsitzbank begrenzt. In normaler Fahrtrichtung nach hinten ist der Laderaum 4 durch eine Heckbegrenzung 5, vorliegend in Form einer Heckklappe, begrenzt.

Um den Laderaum 4 knapp unterhalb einer Fahrzeugbrüstung gegen Blicke von außen abdecken zu können, ist eine Laderaumabdeckung 6 bis 10 vorgesehen. Die Laderaumabdeckung umfasst ein Kassettengehäuse 6, das rückseitig an die Rückenlehnenanordnung 3 der Fondsitzbank anschließt. Das Kassettengehäuse 6 ist fahrzeugfest angeordnet, indem es entweder an der Rückenlehnenanordnung selbst oder an Seitenbrüstungen des Fahrzeuginnenraumes 2 befestigt ist. In dem Kassettengehäuse 6 ist ein flexibles Flächengebilde 7 in Form einer Abdeckplane angeordnet, das auf einer in dem Kassettengehäuse 6 drehbar gelagerten Wickelwelle auf- und abwickelbar gehalten ist. Das Flächengebilde 7 ist durch einen zu einem Heckbereich hin offenen Austrittsschlitz des Kassettengehäuses 6 nach hinten ausziehbar und erstreckt sich in seiner ausgezogenen Endposition etwa horizontal über etwa die Länge des Laderaumes 4. In der aufgewickelten Ruheposition ist das Flächengebilde 7 vollständig in das Kassettengehäuse 6 eingezogen.

Ein vorderer Stirnendbereich des Flächengebildes 7 ist mit einem Konturteil 8 verbunden, das formstabil ausgeführt ist (Fig. 2).

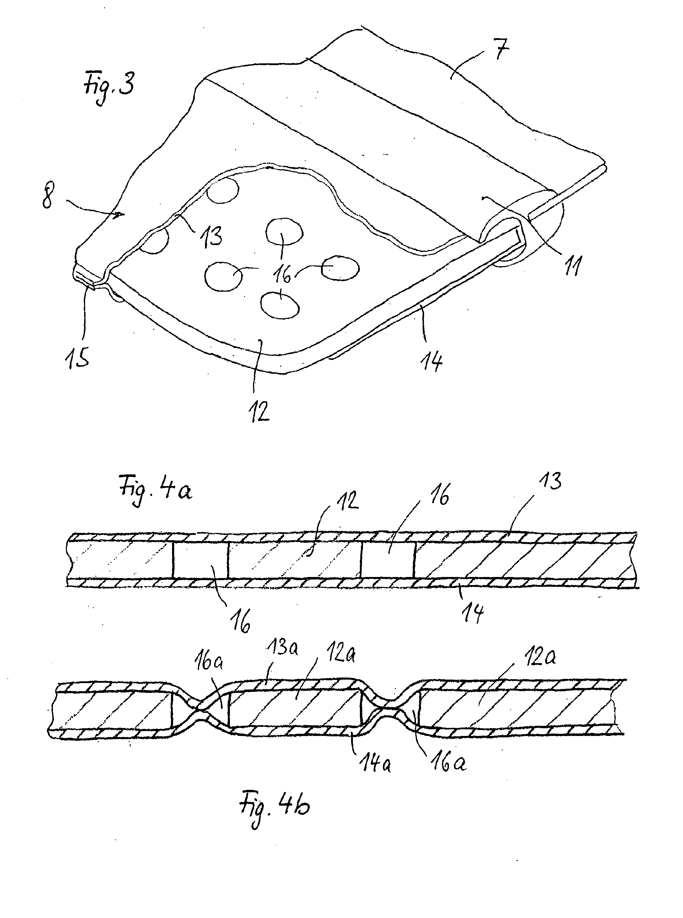

Wie Fig. 3 entnehmbar ist, wird das Konturteil 8 mittels einer Profilleiste 11 mit dem Flächengebilde 7 verbunden. Die Profilleiste 11 weist seitlich über die Seitenränder des Flächengebildes 7 nach außen abragende Haltezapfen 10 auf, die in korrespondierende, fahrzeugseitige Halteaufnahmen im Heckbereich des Laderaumes 4 einhängbar sind.

Das Konturteil 8 erstreckt sich in der ausgezogenen und in die fahrzeugseitigen Halteaufnahmen eingehängten Endposition des Flächengebildes 7 zu der Heckbegrenzung 5 hin nach hinten. Das Konturteil 8 erstreckt sich über die gesamte Breite des Flächengebildes 7 und ist in seiner äußeren, vom Flächengebilde 7 wegragenden Randkontur an die Innenkontur der Heckbegrenzung 5 angepasst, um einen Freiraum oder Spalt zwischen der Heckbegrenzung 5 und der Profilleiste 11 in ausgezogener Endposition des Flächengebildes 7 zumindest weitgehend bündig zu überdecken.

Für die Erleichterung der manuellen Bedienbarkeit des Konturteils 8 ist in dem Konturteil 8 ein Griffteil 9 vorgesehen.

Das Konturteil 8 umfasst einen plattenförmigen Flächenkörper 12 aus einem formsteifen Material, insbesondere aus einer Kunststoff- oder Leichtmetallplatte, der die Form und Steifigkeit des Konturteiles 8 bildet. Der Flächenkörper 12 ist über seine gesamte Fläche mit einer Vielzahl von gleichmäßig verteilt angeordneten Aussparungen 16 versehen (Fig. 3 und 4a). Die Aussparungen 16 sind als Durchtritte ausgeführt, die die gesamte Dicke des Flächenkörpers 12 durchdringen und beim dargestellten Ausführungsbeispiel über die gesamte Länge jedes Durchtrittes und damit über die gesamte Dicke des Flächenkörpers 12 den gleichen freien Querschnitt besitzen. Der Flächenkörper 12 besitzt somit eine Lochstruktur, die gitterartig ausgebildet sein kann. Diese Lochstruktur dient zur Gewichtsreduzierung des Flächenkörpers 12, ohne die für einen einwandfreien Betrieb der Laderaumabdeckung zumindest notwendige Steifigkeit des Flächenkörpers 12 aufzugeben.

Der Flächenkörper 12 ist beidseitig mit einem Überzug in Form eines Schichtgebildes 13, 14 aus einem Kunststoff-, Textil- oder Vliesmaterial versehen. Das Schichtgebilde 13, 14 kann ein- oder mehrschichtig aufgebaut sein. Kunststoff-, Textil- oder Vliesmaterialien können geeignet miteinander kombiniert sein. Der Flächenkörper 12 ist sowohl im Bereich seiner gesamten Oberseite als auch im Bereich seiner gesamten Unterseite jeweils mit einem entsprechenden Schichtgebilde 13, 14 flächig überzogen. Das Schichtgebilde 13, 14 ist vorzugsweise flächig auf den Flächenkörper 12 aufkaschiert. Die Schichtgebilde 13, 14 sind bei der Ausführungsform nach den Fig. 3 und 4 derart über den Flächenkörper 12 gespannt, dass sich auch im Bereich der Durchtritte 16 kein Einzug des jeweiligen Schichtgebildes nach innen ergibt. Die Schichtgebilde 13, 14 überspannen vielmehr die Durchtritte 16 in der gleichen Ebene wie die übrigen Abschnitte des Flächenkörpers 12, an denen keine Durchtritte vorgesehen sind.

Bei der Ausführungsform nach Fig. 4b, die im Übrigen der zuvor beschriebenen Ausführungsform entspricht, sind entsprechende Schichtgebilde 13a, 14a, die den Flächenkörper 12a ober- und unterseitig überdecken, weniger stark gespannt, so dass die jeweiligen Abschnitte der Schichtgebilde in die Durchtritte 16a eintauchen können. Beim Ausführungsbeispiel nach Fig. 4b sind die Schichtgebilde 13a, 14a im Bereich ihrer in die Durchtritte 16a von oben bzw. von unten eintauchenden Abschnitte so weit eingezogen, dass sich die gegenüberliegenden Schichtgebilde in den Durchtritten 16a berühren. Beide Schichtgebilde 13a, 14a sind innenseitig mit einer Kaschierung versehen, so dass die Schichtgebilde 13a, 14a mit ihren im Bereich der Durchtritte 16a miteinander verbundenen Abschnitte gegeneinander fixiert sind.

Außenseitig sind beide Schichtgebilde 13, 14 bzw. 13a, 14a im Bereich eines umlaufenden Saumes 15 durchgängig miteinander verbunden. Der Saum 15 verläuft längs der Randkante des Flächenkörpers 12.

## Patentansprüche

1. Laderaumabdeckung für ein Kraftfahrzeug mit einem zwischen einer kompakt abgelegten Ruheposition und einer ausgezogenen Funktionsposition beweglich gelagerten, flexiblen Flächengebilde, das an seinem in Auszugrichtung vorderen Stirnendbereich mit einem formstabilen Konturteil versehen ist, das einen ebenen oder gewölbten Flächenkörper mit gegenüber seiner Länge und Breite wesentlich verringerter Dicke umfasst, **dadurch gekennzeichnet, dass** der Flächenkörper (12, 12a) mit mehreren, über seine Fläche verteilt angeordneten Aussparungen (16, 16a) versehen ist.

2. Laderaumabdeckung nach Anspruch 1, **dadurch gekennzeichnet, dass** die Aussparungen als Vertiefungen ausgeführt sind, die wenigstens von einer Seite her in eine Oberfläche des Flächenkörpers eingebracht sind.

3. Laderaumabdeckung nach Anspruch 1, **dadurch gekennzeichnet, dass** die Aussparungen als zu beiden Seiten hin offene Durchtritte (16, 16a) gestaltet sind.

4. Laderaumabdeckung nach Anspruch 2, **dadurch gekennzeichnet, dass** die Vertiefungen paarweise von gegenüberliegenden Seiten her vorgesehen sind und sich quer zu einer Körperebene des Flächenkörpers diametral gegenüberliegen.

5. Laderaumabdeckung nach Anspruch 1, **dadurch gekennzeichnet, dass** der Flächenkörper (12, 12a) wenigstens einseitig mit einem Überzug (13, 14; 13a, 14a) versehen ist.

6. Laderaumabdeckung nach Anspruch 5, **dadurch gekennzeichnet, dass** der Überzug als wenigstens einteiliges Schichtgebilde (13, 14; 13a, 14a) aus einem Kunststoff-, Textil- oder Vliesmaterial gestaltet ist.

7. Laderaumabdeckung nach Anspruch 5, **dadurch gekennzeichnet, dass** Abschnitte des Überzugs (13a, 14a) in die Aussparungen (16a) eingezogen sind.

8. Laderaumabdeckung nach Anspruch 5, **dadurch gekennzeichnet, dass** der Flächenkörper (12) beidseitig mit einem Überzug (13, 14) beschichtet ist, wobei die beiden Überzugschichten an Seitenrändern des Flächenkörpers (12) miteinander verbunden sind.

9. Laderaumabdeckung nach Anspruch 5, **dadurch gekennzeichnet, dass** der Überzug (13, 14) auf den Flächenkörper (12) aufkaschiert ist.

10. Laderaumabdeckung nach Anspruch 7, **dadurch gekennzeichnet, dass** Abschnitte des Überzugs (13a, 14a) auf gegenüberliegenden Seiten des Flächenkörpers (12a) im Bereich von Durchtritten (16a) miteinander verbunden sind.
